# EUROPÄISCHE PATENTSCHRIFT

(11) **EP 1 061 300 B1**
(45) Veröffentlichungstag und Bekanntmachung des Hinweises auf die Patenterteilung: **27.08.2003**
(21) Anmeldenummer: 00112278.7
(22) Anmeldetag: 08.06.2000
(51) Int. Cl.: F16K 31/60, F16K 35/02

(54) **Stellvorrichtung**
Actuator
Actionneur

(30) Priorität: 12.06.1999 DE 19926867
(43) Veröffentlichungstag der Anmeldung: 20.12.2000
(73) Patentinhaber: Friedrich Grohe AG & Co. KG, 58675 Hemer (DE)
(72) Erfinder: Philipps-Liebich, Hartwig, 58675 Hemer (DE); Heupel, Norbert, 59872 Meschede (DE)

(56) Entgegenhaltungen:
- EP-A- 0 232 454
- EP-A- 0 530 471
- EP-A- 0 683 341
- GB-A- 1 126 439

## Beschreibung

Die Erfindung betrifft eine Stellvorrichtung mit einem Drehgriff für ein Wasserventil, insbesondere für ein sanitäres Wasserventil, bei der mit dem Drehgriff ein Ventilglied relativ zu wenigstens einem Ventilsitz bewegbar ist, wobei eine radial aus dem Drehgriff vostehende Taste vorgesehen ist und der Drehgriff mit einem im Mantelbereich angeordneten, entgegen der Kraft einer Feder lösbaren Anschlag mit einem feststehenden, wenigstens eine Anschlagnase und einen Freiraum aufweisenden Anschlagring zusammenwirkt.

Dokument EP 0 530 471 A1 offenbart eine derartige Stellvorrichtung.

Eine andere Stellvorrichtung ist aus der Druckschrift EP 0 232 454 A1 bekannt. Hierbei ist der lösbare Anschlag als zweiarmiger Hebel bzw. als Wippe ausgebildet. Eine derartige Bauweise erfordert eine relativ lange Ausbildung des Drehgriffs, was beispielsweise aus geschmacklichen Gründen häufig unerwünscht ist.

Der Erfindung liegt die Aufgabe zugrunde, eine verbesserte Ausbildung des lösbaren Anschlags zu schaffen, so dass insbesondere die Länge des Drehgriffs erheblich verringert werden kann.

Diese Aufgabe wird erfindungsgemäss dadurch gelöst, dass der lösbare Anschlag als einarmiger Hebel ausgebildet ist, wobei der Anschlag mit der Taste radial von der Anschlagnase weg in den Freiraum des Anschlagrings auslenkbar ist.

Weitere Ausgestaltungen der Erfindung sind in den Ansprüchen 2 bis 13 angegeben.

Mit den vorgeschlagenen Massnahmen wird insbesondere erreicht, dass der lösbare Anschlag relativ kurz bauend ausgebildet werden kann, da die bisher erforderliche zweite Wippenseite entfallen kann. Ausserdem kann der lösbare Anschlag im wesentlichen verdeckt angeordnet werden, so dass für den Benutzer nur noch die Taste zur Lösung des Anschlags sichtbar ist. Andererseits wird die gute Handhabbarkeit und lange Lebensdauer eines als Wippe ausgebildeten lösbaren Anschlags mit den erfindungsgemässen Massnahmen beibehalten.
In weiterer Ausgestaltung der Erfindung kann der lösbare Anschlag vorteilhaft an einem an dem Drehgriff stirnseitig befestigbaren Querstück angelenkt werden. Hierdurch wird insbesondere eine relativ einfache Montage des lösbaren Anschlags am Drehgriff ermöglicht.

Ausführungsbeispiele der Erfindung sind in der Zeichnung dargestellt und werden im folgenden näher beschrieben. Es zeigt
- Fig. 1: einen Drehgriff im Längsschnitt, anmontiert an einem Wasserventil in Form eines thermostatgeregelten Mischventils;
- Fig. 2: den in Fig. 1 gezeigten Drehgriff auseinandergezogen in Perspektivansicht;
- Fig. 3: ein in Fig. 2 gezeigtes Querstück im Längsschnitt mit angelenkter lösbarer Anschlagausbildung;
- Fig. 4: einen vergrösserten Ausschnitt des in Fig. 3 gezeigten Querstücks;
- Fig. 5: ein anderes Ausführungsbeispiel eines Drehgriffs im Längsschnitt, anmontiert an einem Wasserventil in Form eines thermostatgeregelten Mischventils;
- Fig. 6: ein weiteres Ausführungsbeispiel eines Drehgriffs im Längsschnitt, anmontiert an einem Wasserventil in Form eines thermostatgeregelten Mischventils;
- Fig. 7: ein in Fig. 6 gezeigtes Querstück in der Schnittebene VII;
- Fig. 8: einen vergrösserten Ausschnitt aus der Fig. 7;
- Fig. 9: ein weiteres Ausführungsbeispiel eines Drehgriffs im Längsschnitt, anmontiert an einem Wasserventil in Form eines thermostatgeregelten Mischventils;
- Fig. 10: den in Fig. 9 gezeigten Drehgriff im Längsschnitt, anmontiert an einem Wasserventil in Form eines Mengenregulierventils.

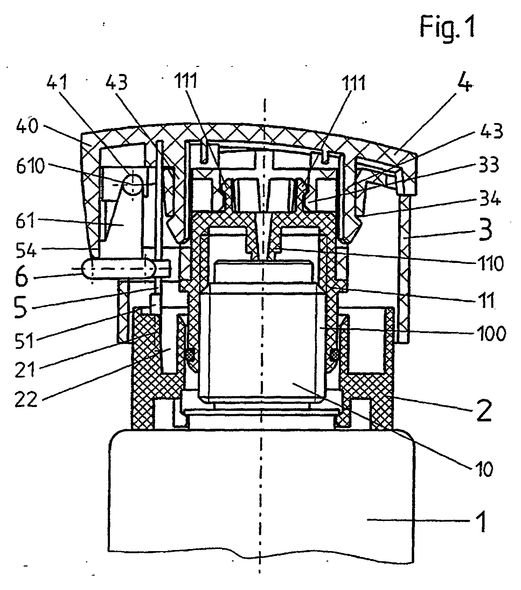

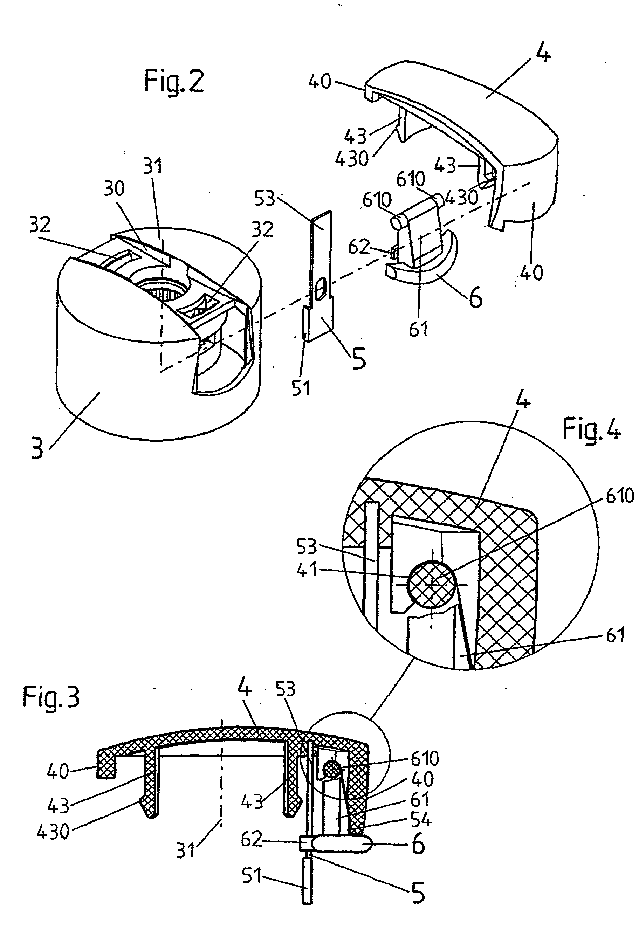

Bei den Ausführungsbeispielen in der Zeichnung sind der Einfachheit halber gleiche oder entsprechende Elemente mit gleichen Bezugszeichen versehen.
Bei dem in Fig. 1 bis 4 gezeigten Ausführungsbeispiel ist an einem zum Teil dargestellten Wasserventil 1 in Form eines thermostatgeregelten Mischventils stirnseitig ein Anschlagring 2 drehfest in bekannter Weise befestigt. Koaxial zum Anschlagring 2 ist an dem Wasserventil 1 ein Ansatz 10 mit einem Bewegungsgewinde 100 ausgebildet. Auf dem Bewegungsgewinde 100 ist eine Stellmutter 11 angeordnet, die mit einem zentralen Dorn 110 die Position eines in der Zeichnung nicht dargestellten Thermostat- oder Dehnstoffelements in Abhängigkeit von ihrer Drehstellung bestimmt. Mit der jeweiligen Axialposition des Dorns 110 kann somit die Temperatur des vom Mischventil erzeugten Wassers bestimmt werden. Auf dem Aussenmantel der Mutter 11 ist eine Riefenverzahnung ausgebildet, von der ein Drehgriff 3 drehfest aufgenommen ist. Zur Axialsicherung des Drehgriffs 3 auf der Stellmutter 11 sind stirnseitig Federbeinchen 111 angeformt, die in der Stecklage des Drehgriffs 3 auf der Stellmutter 11 hinter eine Ringschulter 33 fassen und den Drehgriff 3 in der Stecklage verrasten.
An der vorstehenden Stirnseite des Drehgriffs 3 ist, wie es insbesondere aus Fig. 2 zu entnehmen ist, eine Diagonalnut 30 ausgebildet, in die ein Querstück 4 einsetzbar ist. An dem Querstück 4 sind federnde Zungen 43 ausgebildet, die bei der Anmontage in diametral gegenüberliegenden Rastnuten 32 am Drehgriff 3 parallel zur Mittelachse 31 eingeführt werden. Bei den federnden Zungen 43 sind am vorderen Bereich radial vorstehende Rastnasen 430 ausgebildet, die beim Einführen in die Rastnuten 32 radial ausgelenkt werden und in der Stecklage in eine Rastposition unterhalb einer Schulter 34 zurückfedern und das Querstück 4 in der Stecklage zum Drehgriff 3 sichern. Die Anordnung der federnden Zungen 43 ist hierbei so gewählt, dass die federnden Zungen 43 in der Stecklage von dem Aussenmantel der Stellmutter 11 in der Rastposition gesichert werden. Das Querstück 4 kann somit lediglich vor der Anmontage des Drehgriffs 3 an der Stellmutter 11 mit dem Drehgriff 3 zusammengefügt werden. An dem Querstück 4 sind Stirnseiten 40 ausgebildet, wobei die länger ausgebildete Stirnseite 40 die Durchtrittsöffnung in der Seitenwandung des Drehgriffs 3 für eine Taste 6 zur Betätigung eines lösbaren Anschlags 5 begrenzt. Der Anschlag 5 ist hierbei als Biegefeder ausgebildet, dessen federnder Endbereich 53 von dem Querstück 4 aufgenommen ist, wie es insbesondere aus Fig. 3 und 4 ersichtlich ist. Der Anschlag 5 ist im vorderen Bereich zur Vergrösserung der Anschlagfläche und der Steifigkeit mit einer Anschlagfläche 51 versehen. Die Anschlagfläche 51 wirkt mit einer Anschlagnase 21 am Anschlagring 2 zusammen, wie es insbesondere aus Fig. 1 ersichtlich ist.
Zur Auslenkung des lösbaren Anschlags 5 aus seiner Anschlagposition in einen ringförmigen Freiraum 22 des Anschlagrings 2 ist die Taste 6 mit einem Hebelarm 61 und Zapfen 610 in Schnappbohrungen 41 des Querstücks 4 radial verschwenkbar gehaltert. Am inneren Endbereich der Taste 6 sind Schnappnasen 62 ausgebildet, die den Anschlag 5 umfassen und eine Verbindung zwischen Anschlag 5 und der Taste 6 herstellen. Der federnde Endbereich 53 des Anschlags 5 ist dabei im Querstück 4 so positioniert, dass in der Ruheposition der Anschlag 5 mit einer Anschlagfläche 54 des Hebelarm 61 an der inneren Wandung der Stirnseite 40 des Querstücks 4 anliegt. In dieser Position des lösbaren Anschlags 5 kann der Drehgriff 3 nur in eine Drehstellung bewegt werden, in der Mischwasser bis zu einer Temperatur von beispielsweise 37°C eingestellt werden kann. Soll dagegen heisseres Wasser in dem Mischventil hergestellt werden, so ist mit Hilfe der Taste 6 der Anschlag 5 radial auszulenken, so dass die Anschlagfläche 51 in den ringförmigen Freiraum 22 eintaucht. In dieser Position des Anschlags 5 kann dann die Anschlagnase 21 überwunden und der Drehgriff 3 in eine Heisswasserposition gedreht werden. Die Anschlagnase 21 ist dabei so ausgebildet, dass bei einer Drehbewegung aus der Heisswasserposition in eine Kaltwasserposition der lösbare Anschlag 5 durch eine Schrägfläche automatisch die erforderliche Auslenkung zur Überwindung der Anschlagnase 21 erfährt, so dass beim Rückstellvorgang vom Heisswasserbereich in den Kaltwasserbereich die Taste 6 vom Benutzer nicht zu betätigen ist.

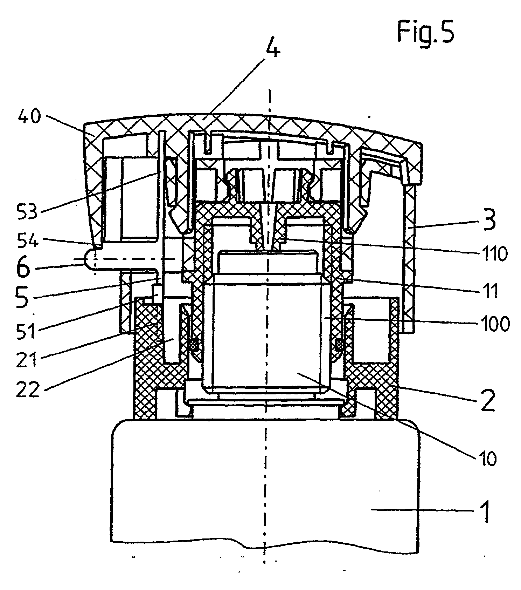

In Fig. 5 ist eine zu vorstehend beschriebenem Ausführungsbeispiel abgewandelte lösbare Anschlagausbildung dargestellt. Anstatt einer separaten Taste ist hierbei an dem Anschlag 5 einstückig die Taste 6 angeformt. In der Ruheposition liegt der Anschlag 5 mit der Anschlagfläche 54 an der Innenseite der Stirnseite 40 des Querstücks 4 an. Bei diesem Ausführungsbeispiel kann der einstückig ausgebildete lösbare Anschlag 5 vorzugsweise aus elastischem Kunststoff hergestellt werden. Im übrigen entspricht diese Ausführung der vorstehend beschriebenen.

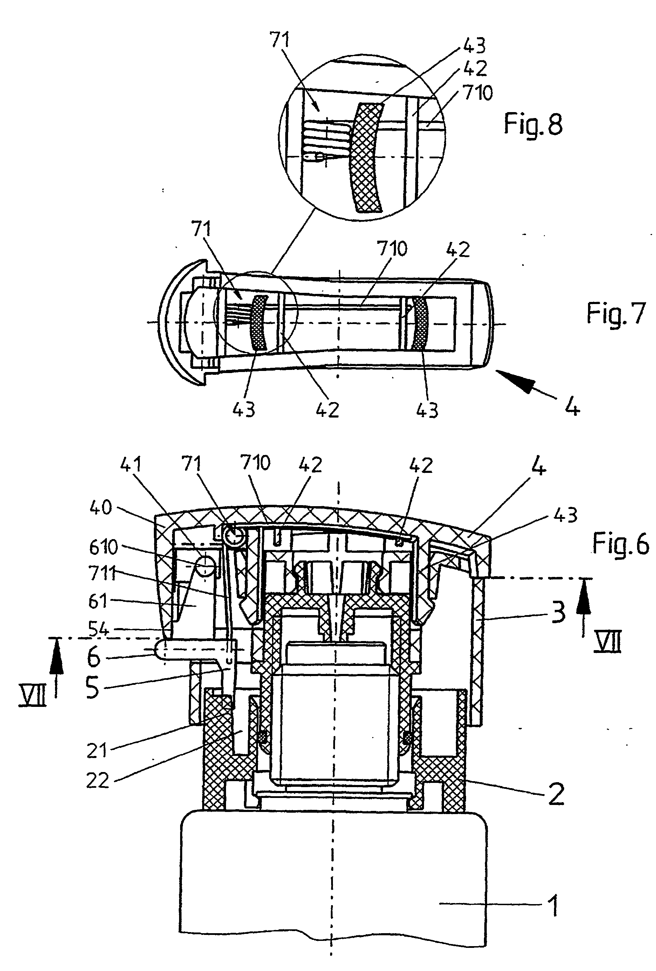

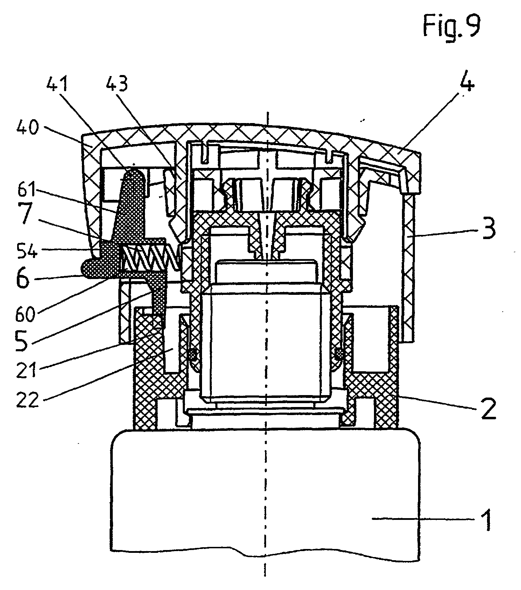

Bei dem in Fig. 6 bis 8 dargestellten Ausführungsbeispiel ist der lösbare Anschlag 5 unmittelbar an der Taste 6 ausgebildet, wobei die Taste 6 wiederum mit einem Hebelarm 61 mittels Zapfen 610 in den Schnappbohrungen 41 am Querstück 4 verschwenkbar gehaltert ist. Damit der lösbare Anschlag 5 sich in der Ruhestellung in seiner Anschlagposition befindet, ist am Querstück 4 eine gewundene Drahtbiegefeder 71 angeordnet, wobei ein Federschenkel 710 der Drahtbiegefeder 71 von Stegen 42 am Querstück 4 gehalten ist, wie es insbesondere aus Fig. 7 und 8 zu entnehmen ist, während der andere Federschenkel 711 der Drahtbiegefeder 71 am Anschlag 5 anliegt und den lösbaren Anschlag 5 in der Ruheposition im Bereich der Taste 6 mit einer Anlagefläche 54 an die Innenseite der Stirnseite 40 des Querstück 4 andrückt. Wird nun vom Benutzer die Taste 6 entgegen der Kraft der Drahtbiegefeder 71 radial nach innen ausgelenkt, so gelangt wiederum der lösbare Anschlag 5 in den ringförmigen Freiraum 22, so dass in dieser Anschlagposition der Drehgriff 3 weiter in eine Heisswasserstellung des Mischventils gedreht werden kann. Im übrigen entspricht dieses Ausführungsbeispiel den vorstehenden.
Das in Fig. 9 der Zeichnung gezeigte Ausführungsbeispiel unterscheidet sich im wesentlichen zu dem in Fig. 6 gezeigten dadurch, dass anstatt einer Drahtbiegefeder 71 eine schraubenförmig gewundene Druckfeder 7 vorgesehen ist. Zur Führung und Halterung der Druckfeder 7 ist hierbei eine Sackbohrung 60 in der Taste 6 vorgesehen. Die Druckfeder 7 ist in der Länge so dimensioniert, dass sie sich einerseits im Grund der Sackbohrung 60 und andererseits an der Aussenwandung der Nabe des Drehgriffs 3 abstützt und in der Ruhestellung den lösbaren Anschlag 5 im Bereich der Taste 6 mit einer Anschlagfläche 54 an die Innenwandung der Stirnseite 40 des Querstücks 4 drückt. Durch eine radiale Betätigung der Taste 6 entgegen der Kraft der Druckfeder 7 kann somit vom Benutzer wiederum der lösbare Anschlag 5 aus seiner Anschlagposition in den ringförmigen Freiraum 22 ausgelenkt werden, so dass dann der Drehgriff 3 in den Heisswasserbereich bewegt werden kann. Im übrigen entspricht dieses Ausführungsbeispiel den vorstehend beschriebenen.

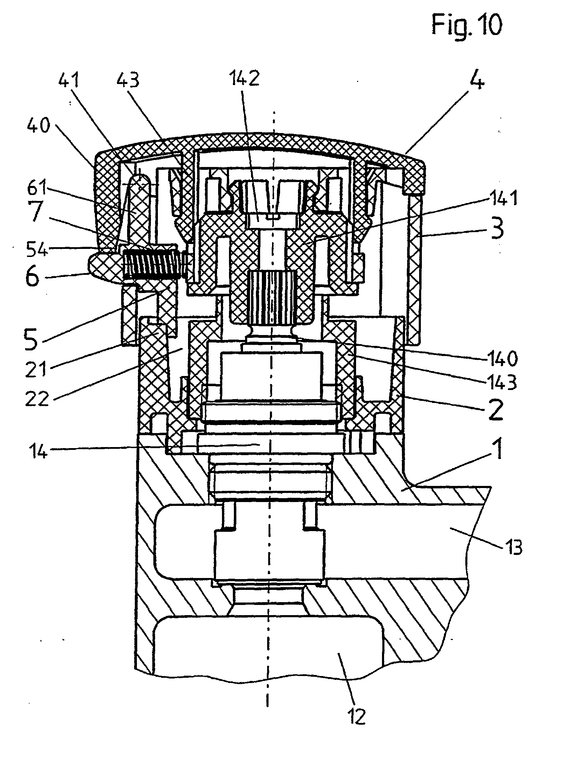

Bei dem Ausführungsbeispiel gemäss Fig. 10 der Zeichnung ist der in Fig. 9 gezeigte Drehgriff 3 an einem Wasserventil 1 zur Durchflussmengenregulierung angeordnet. Hierbei weist das Wasserventil 1 einen Wasserzuflusskanal 12 und einen Wasserabflusskanal 13 auf.

In dem Wasserventil 1 ist ausserdem ein als Ventilkartusche ausgebildetes Mengenregulierventil 14 angeordnet. Das Mengenregulierventil 14 ist mit einer drehbaren Ventilspindel 140 versehen, auf dessen Endbereich ein Befestigungskopf 141 für den Drehgriff 3 drehfest angeordnet ist. Der Befestigungskopf 141 wird hierbeimit einer Sicherungsschraube 142 in seiner Axialposition gehalten.
Der Anschlagring 2 ist mit Hilfe einer am Mengenregulierventil 14 angeordneten Ringmutter 143 zum Wasserventil 1 gehalten.
Mit der in der Zeichnung dargestellten Position des lösbaren Anschlags kann das Mengenregulierventil 14 von der Absperrposition bis zur Anlage des lösbaren Anschlags an der Anschlagnase 21 in die Offenstellung bewegt werden. Diese Anschlagposition kann z. B. so angeordnet sein, dass das Mengenregulierventil 14 etwa nur zur Hälfte geöffnet wird. Erst wenn der Benutzer über die Taste 6 den lösbaren Anschlag 5 in den ringförmigen Freiraum 22 des Anschlagrings 2 bewegt, kann das Mengenregulierventil 14 in die maximale Öffnungsposition gebracht werden. Zur zwanglosen Rückführung von der maximalen Öffnungsposition in die Schliessposition ist an der Rückseite der Anschlagnase 21 eine Schrägfläche ausgebildet, so dass beim Rückdrehen die Auslenkung des Anschlags 5 selbsttätig erfolgt. Erst bei dem erneuten Öffnungsvorgang ist dann vom Benutzer mit Hilfe der Taste 6 der lösbare Anschlag 5 wiederum auszulenken, wenn die maximale Öffnungsposition eingestellt werden soll.
Selbstverständlich können auch die in Fig. 1 bis 6 dargestellten Ausführungsbeispiele des lösbaren Anschlags 5 ebenfalls entsprechend bei einem Mengenregulierventil 14 eingesetzt werden.

## Patentansprüche

1. Stellvorrichtung mit einem Drehgriff (3) für ein Wasserventil (1), insbesondere ein sanitäres Wasserventil (1), bei der mit dem Drehgriff (3) ein Ventilglied relativ zu wenigstens einem Ventilsitz bewegbar ist, wobei eine radial aus dem Drehgriff (3) vorstehende Taste (6) vorgesehen ist und der Drehgriff (3) mit einem im Mantelbereich angeordneten, entgegen der Kraft einer Feder lösbaren Anschlag (5) mit einem feststehenden, wenigstens eine Anschlagnase (21) und einen Freiraum (22) aufweisenden Anschlagring (2) zusammenwirkt, **dadurch gekennzeichnet, dass** der lösbare Anschlag (5) als einarmiger Hebel ausgebildet ist, wobei der Anschlag (5) mit der Taste (6) radial von der Anschlagnase (21) weg in den Freiraum (22) des Anschlagrings (2) auslenkbar ist.

2. Stellvorrichtung nach Anspruch 1, **dadurch gekennzeichnet, dass** der Anschlag (5) einstückig mit der Taste (6) hergestellt ist.

3. Stellvorrichtung nach Anspruch 2, **dadurch gekennzeichnet, dass** an der der Taste (6) gegenüberliegenden Innenseite im Anschlag (5) eine Sackbohrung (60) für die Abstützung und Führung einer Druckfeder (7) vorgesehen ist.

4. Stellvorrichtung nach Anspruch 1 oder 2, **dadurch gekennzeichnet, dass** der lösbare Anschlag (5) mit einem federnden Endbereich (53) ausgebildet ist, der am Drehgriff (3) gehalten ist.

5. Stellvorrichtung nach wenigstens einem der Ansprüche 1 bis 4, **dadurch gekennzeichnet, dass** der Drehgriff (3) an der vorstehenden Stirnseite eine Diagonalnut (30) aufweist, in der ein Querstück (4) einsetzbar ist, dessen eine Stirnseite (40) eine Durchtrittsöffnung für die Taste (6) begrenzt, wobei an dem Querstück (4) der lösbare Anschlag (5) verschwenkbar befestigt ist.

6. Stellvorrichtung nach Anspruch 4 oder 5, **dadurch gekennzeichnet, dass** die Taste (6) mit Abstand zum federnden Endbereich (53) einstückig mit dem lösbaren Anschlag (5) ausgebildet ist.

7. Stellvorrichtung nach Anspruch 4, 5 oder 6, **dadurch gekennzeichnet, dass** der federnde Endbereich (53) am Querstück (4) eingespannt ist.

8. Stellvorrichtung nach Anspruch 1, 4, 5 oder 7, **dadurch gekennzeichnet, dass** die Taste (6) mit einem Hebelarm (61) versehen ist, der mit Zapfen (610) in Schnappbohrungen (41) in Querstück (4) verschwenkbar gehalten ist, wobei die Taste (6) an einem als Biegefeder ausgebildeten lösbaren Anschlag (5) anliegt und mit Schnappnasen (62) verrastet ist.

9. Stellvorrichtung nach Anspruch 2, 3 oder 5, **dadurch gekennzeichnet, dass** der lösbare Anschlag (5) mit an seinem Hebelarm (61) ausgebildeten Zapfen (610) in Schnappbohrungen (41) in Querstück (4) verschwenkbar gehalten ist.

10. Stellvorrichtung nach Anspruch 9, **dadurch gekennzeichnet, dass** eine gewundene Drahtbiegefeder (71) vorgesehen ist, wobei ein Federschenkel (710) am Querstück (4) mittels Stege (42) gehalten ist, während der andere Federschenkel (711) am Anschlag (5) anliegt.

11. Stellvorrichtung nach Anspruch 9 oder 10, **dadurch gekennzeichnet, dass** der Hebelarm (61) des Anschlags (5) mit einer Anschlagfläche (54) versehen ist, die in der Ruhestellung an der Innenfläche des Querstücks (4) anliegt.

12. Stellvorrichtung nach wenigstens einem der Ansprüche 5 bis 11, **dadurch gekennzeichnet, dass** das Querstück (4) mit federnden Zungen (43) am Drehgriff (3) verrastet ist.

13. Stellvorrichtung nach Anspruch 12, **dadurch gekennzeichnet, dass** zur Aufnahme der federnden Zungen (43) im Drehgriff (3) zu beiden Seiten der Mittelachse (31) jeweils eine Rastnut (32) ausgebildet ist, wobei die Zungen (43) so angeordnet sind, dass bei aufgestecktem Drehgriff (3) auf ein Wasserventil (1) die Rastzungen (32) radial verriegelt werden, so dass in dieser Stellung das Querstück (4) unlösbar mit dem Drehgriff (3) verbunden ist.

## Claims

1. Adjusting device having a rotatable control (3) for a water valve (1), especially a sanitary water valve (1), in which a valve member is movable by means of the rotatable control (3) relative to at least one valve seat, wherein a push-button (6) protruding radially from the rotatable control (3) is provided and the rotatable control (3), by means of a stop (5) arranged in the casing region and releasable against the force of a spring, co-operates with a fixed stop ring (2) having at least one stop projection (21) and a gap (22), **characterised in that** the releasable stop (5) is in the form of a single-arm lever, the stop (5) being displaceable by means of the push-button (6) radially away from the stop projection (21) into the gap (22) of the stop ring (2).

2. Adjusting device according to claim 1, **characterised in that** the stop (5) is manufactured in one piece with the push-button (6).

3. Adjusting device according to claim 2, **characterised in that** in the stop (5), on the inside lying opposite the push-button (6), there is a blind bore (60) for support and guidance of a compression spring (7).

4. Adjusting device according to claim 1 or 2, **characterised in that** the releasable stop (5) is formed with a resilient end region (53), which is held against the rotatable control (3).

5. Adjusting device according to at least one of claims 1 to 4, **characterised in that** on its protruding end face the rotatable control (3) has a cross-wise groove (30) in which a cross-member (4) is insertable, one end face (40) of which defines a through-opening for the button (6), the releasable stop (5) being pivotally secured to the cross-member (4).

6. Adjusting device according to claim 4 or 5, **characterised in that** the push-button (6) is, remote from the resilient end region (53), constructed in one piece with the releasable stop (5).

7. Adjusting device according to claim 4, 5 or 6, **characterised in that** the resilient end region (53) is clamped against the cross-member (4).

8. Adjusting device according to claim 1, 4, 5 or 7, **characterised in that** the push-button (6) is provided with a lever arm (61) that is pivotally retained by means of pins (610) in snap-in bores (41) in cross-member (4), the push-button (6) lying against a releasable stop (5) in the form of a flat spring and being locked with snap-locking projections (62).

9. Adjusting device according to claim 2, 3 or 5, **characterised in that** the releasable stop (5) is pivotally retained in snap-in bores (41) in cross-member (4) by means of pins (610) formed on its lever arm (61).

10. Adjusting device according to claim 9, **characterised in that** a coiled wire torsion spring (71) is provided, one leg (710) of the spring being held against the cross-member (4) by means of ribs (42) whilst the other leg (711) of the spring lies against the stop (5).

11. Adjusting device according to claim 9 or 10, **characterised in that** the lever arm (61) of the stop (5) is provided with a stop face (54) which in the rest position lies against the inner surface of the cross-member (4).

12. Adjusting device according to at least one of claims 5 to 11, **characterised in that** the cross-member (4) is locked to the rotatable control (3) by resilient tongues (43).

13. Adjusting device according to claim 12, **characterised in that** a respective snap-in slot (32) is formed in the rotatable control (3) on each side of the centre line (31) to receive a respective one of the resilient tongues (43), the snap-in slots (32) being so arranged that when the rotatable control (3) is put into place on a water valve (1) the tongues (43) are locked radially, so that in this position the cross-member (4) is non-detachably joined to the rotatable control (3).

## Revendications

1. Dispositif de réglage comportant une poignée tournante (3) pour un robinet à eau (1), en particulier un robinet à eau (1) sanitaire, dans lequel, au moyen de la poignée tournante (3), un élément de robinet est mobile par rapport à au moins un siège de robinet, une touche (6) faisant saillie radialement à partir de la poignée tournante (3) étant prévue et la poignée tournante (3) coopérant avec une butée (5) disposée dans la zone de l'enveloppe, amovible à l'encontre de la force d'un ressort, comportant une bague de butée (2) stable présentant au moins un nez de butée (21) et un espace libre (22),
**caractérisé en ce que**
la butée amovible (5) est formée comme un levier à un seul bras, la butée (5) pouvant, au moyen de la touche (6), être orientée radialement à partir du nez de butée (21) dans l'espace libre (22) de la bague de butée (2).

2. Dispositif de réglage selon la revendication 1,
**caractérisé en ce que**
la butée (5) est réalisée d'un seul tenant avec la touche (6).

3. Dispositif de réglage selon la revendication 2,
**caractérisé en ce que**
sur la face interne opposée à la touche (6), dans la butée (5), un orifice borgne (60) est prévu pour l'appui et le guidage d'un ressort de pression (7).

4. Dispositif de réglage selon la revendication 1 ou 2,
**caractérisé en ce que**
la butée amovible (5) est formée avec une zone d'extrémité (53) élastique qui est maintenue sur la poignée tournante (3).

5. Dispositif de réglage selon au moins l'une des revendications 1 à 4,
**caractérisé en ce que**
la poignée tournante (3) présente, sur la face frontale faisant saillie, une rainure en diagonale (30) dans laquelle peut être introduite une pièce transversale (4), dont une face frontale (40) délimite une ouverture de passage pour la touche (6), la butée amovible (5) étant maintenue de manière pivotante sur la pièce transversale (4).

6. Dispositif de réglage selon la revendication 4 ou 5,
**caractérisé en ce que**
la touche (6) est formée, à distance de la zone d'extrémité (53) élastique, d'un seul tenant avec la butée amovible (5).

7. Dispositif de réglage selon la revendication 4, 5 ou 6,
**caractérisé en ce que**
la zone d'extrémité (53) élastique est serrée sur la pièce transversale (4).

8. Dispositif de réglage selon la revendication 1, 4, 5 ou 7,
**caractérisé en ce que**
la touche (6) est dotée d'un bras (61) de levier qui est maintenu de manière pivotante, par des tourillons (610), dans des orifices d'encliquetage (41) dans la pièce transversale (4), la touche (6) reposant sur une butée amovible (5) formée comme un ressort spiral et étant accrochée à l'aide de nez d'encliquetage (62).

9. Dispositif de réglage selon la revendication 2, 3 ou 5,
**caractérisé en ce que**
la butée amovible (5) est maintenue de manière pivotante, à l'aide du tourillon (610) formé sur son bras (61) de levier, dans les orifices d'encliquetage (41) dans la pièce transversale (4).

10. Dispositif de réglage selon la revendication 9,
**caractérisé en ce qu'**
est prévu un ressort spiral en fil métallique (71) enroulé, une branche (710) du ressort étant maintenue sur la pièce transversale (4) au moyen de tiges (42), tandis que l'autre branche (711) de ressort s'appuie sur la butée (5).

11. Dispositif de réglage selon la revendication 9 ou 10,
**caractérisé en ce que**
le bras (61) de levier de la butée (5) est muni d'une surface (54) de butée qui, en position de repos, s'appuie sur la surface interne de la pièce transversale (4).

12. Dispositif de réglage selon au moins l'une des revendications 5 à 11,
**caractérisé en ce que**
la pièce transversale (4) est accrochée à l'aide de languettes élastiques (43) sur la poignée tournante (3).

13. Dispositif de réglage selon la revendication 12,
**caractérisé en ce qu'**
une rainure d'accrochage (32) est formée dans la poignée tournante (3) respectivement des deux côtés de l'axe médian (31), pour le support des languettes élastiques (43), les rainures d'accrochage (32) étant disposées de manière à ce que, lorsque la poignée tournante (3) est posée sur un robinet à eau (1), les languettes (43) sont verrouillées radialement, si bien que dans cette position, la pièce transversale (4) est reliée de manière inamovible à la poignée tournante (3).
